# EUROPEAN PATENT SPECIFICATION

(11) **EP 0 436 924 B1**
(45) Date of publication and mention of the grant of the patent: **06.09.1995**
(21) Application number: 90125397.1
(22) Date of filing: 24.12.1990
(51) Int. Cl.: G02B 27/28, H04N 9/097

(54) **Beam combining/splitter cube prism for color polarization**
Strahlvereinigender/-teilender prismatischer Würfel zur Polarisation der Farben
Prisme cubique séparateur/combinateur pour la polarisation de faisceaux colorés

(30) Priority: 27.12.1989 US 457665
(43) Date of publication of application: 17.07.1991
(73) Proprietor: HONEYWELL INC., Minneapolis Minnesota 55408 (US)
(72) Inventor: Gold, Ronald S., Scottsdale, AZ 85254 (US); Jachimowicz, Karen E., Goodyear, AZ 85338 (US)
(74) Representative: Rentzsch, Heinz, Dipl.-Ing.

(56) References cited:
- EP-A- 0 397 369
- FR-A- 2 068 686
- US-A- 3 497 283
- US-A- 3 677 621
- US-A- 3 767 290
- US-A- 4 800 556

## Description

The present invention pertains to light beam control, particularly to beam combining and splitting and more particularly, to light beam combining and splitting dependent on beam color and polarization.

Various approaches have been used for beam combining and splitting. A most common one has been a quad-combining prism. The "quad" prism (i.e., a four piece prism such as four solid pieces, fluid-filled pieces or other sorts of media) has been difficult to fabricate and align for precise operation. Such prism is disclosed in European patent application 0 428 971 filed November 11, 1990.

EP-A-0 397 369 describes an optical apparatus for combining two light beams of different wavelength. The apparatus as shown in Figures 98 and 99 comprises a cube-shaped polarization beam splitter consisting of two halves of triangular cross-section. It further comprises two quarter-wave plates located in the path of the first light beam with a dichroic mirror positioned between those two quarter-wave plates. The light beam of the first wavelength having a first polarization travels through the two quarter-wave plates and the mirror and falls through a first input side of the beam splitter onto the inclined surface where both halves engage each other. From there the beam is reflected out of the beam splitter through a second side thereof. The other beam, having a second wavelength and an orthogonal polarization with respect to the first beam falls through a third side of the beam splitter - which is opposite the first side - through the inclined surface and the first quarter-wave plate onto the mirror, is reflected there back to the inclined surface and leaves the beam splitter through the second side thereof having now a polarization turned around by 90° with respect to the incoming beam and therewith a polarization parallel to the first beam. The two quarter-wave plates are designed for turning the polarization of the second beam by 45° in opposite direction and the mirror is designed for reflecting the second wavelength but lets the first wavelength pass through.

US-A-4 800 556 shows an apparatus for optical data transmission with frequency multiplexing of three optical channels at different wavelengths comprising the features listed in the preamble of claim 1. This transmitter includes first, second and third laser diodes delivering linearly polarized optical beams at respective wavelengths λ2, λ3 and λ4, which are mutually different. Along the path of the light having wavelength λ2 and a first polarization direction S, the transmitter comprises a first transparent plate 16, which is a quarter-wavelength for (2 λ2-λ4), followed by an optical filter with a central frequency corresponding to wavelength λ2, a second quarter-wave plate for wavelength λ4 and finally a polarizer cube. The laser diode which emits light at wavelength λ4 is so located that its polarization plane is also along S, and it delivers a beam which enters the polarizer block orthogonally to the first beam.

The light having wavelength λ4 and having polarization direction S is reflected by the polarizer block towards the second quarter-wave plate, passes through this plate, which gives it a circular polarization, then is reflected by said filter, passes back through the second plate, which then gives it a rectilinear polarization P (orthogonal to S) which allows the beam to pass through the polarizer and to leave the assembly with polarization P.

The light having wavelength λ2 and linearly polarized along S is polarized practically circularly by the first quarter-wavelength plate which is almost a quarter-wave plate for λ2, since (λ2-λ4) is small as compared to λ2. The light then passes through the filter centered on λ2. Its linear polarization is changed to direction P when passing through the second quarter-wave plate, whereat the set of both quarter-wave plates has an effect identical to that of a single λ2/2 plate. The light is then transmitted by the polarizer and leaves the multiplexer in the same beam as the light of wavelength λ4 with polarization P.

For multiplexing the third channel it is sufficient to send the light having wavelength λ3 onto the polarizer in a direction opposite to that of the light of wavelength λ4.

The present invention as characterized in claim 1 is a bi-prism for combining and/or splitting light beams. The bi-prism is easier to fabricate and align than the quad-prism since the latter is a four piece device and the former is a two piece prism. The bi-prism functions with similar results but in a different way than the quad-prism. Instead of two quarter-wave plates with a separate filter inserted between them as used in US-A-4 800 556 the invention only requires a quarter-wave plate and a three-quarter wave plate together with a polarizer cube. The invention is useful in many applications where polarized color combining and splitting is advantageous.

### Brief Description of the Drawings

- Figure 1: illustrates a cube bi-prism light beam combiner/splitter.
- Figure 2: is a perspective view of the cube bi-prism.
- Figure 3: illustrates a light beam combiner/splitter similar to US-A-4 800 556 with additional means for optical path adjustment.

### Description of the Preferred Embodiment

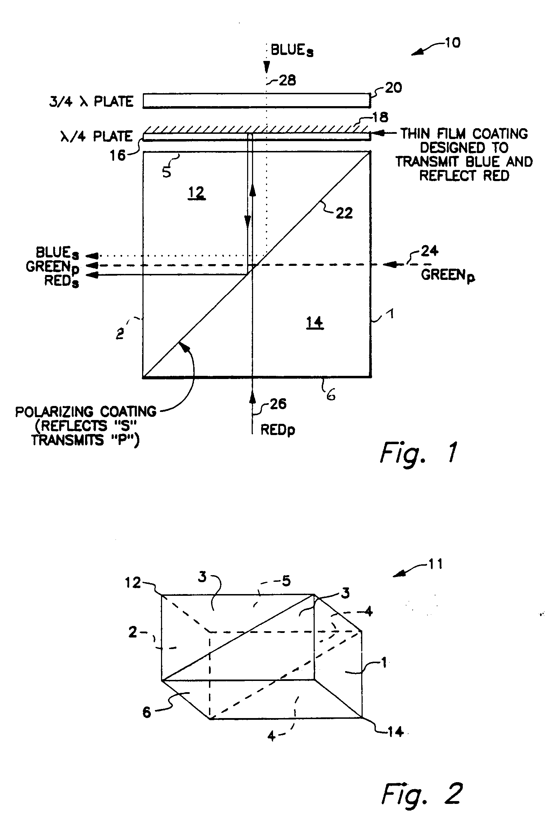

Figure 1 is an illustration of a beam splitter/combiner 10. It comprises two prisms 12 and 14, respectively, having polarized coating 22 at their junction, quarter-wave plate 16 having a thin-film dichroic coating 18, and three-quarter-wave plate 20. Figure 2 is a perspective view of prisms 12 and 14, showing six labelled sides 1, 2, 3, 4, 5 and 6 of bi-prism 11. Prisms 12 and 14 share sides 3 and 4.

In a typical application of device 10, green light 24 having "P" polarization is transmitted through side 1 into prism 14, through polarizing coating 22 and into prism 12. Light 24 exits side 2. Light having "P" polarization has its E field vector parallel to the plane of incidence. Light having "S" polarization has its E field vector perpendicular to the plane of incidence. Polarizing coating 22 transmits light having "P" polarization and reflects light having "S" polarization.

Red light 26 having "P" polarization enters prism 14 through side 6, approximately perpendicular to the direction of green light 24. Red light 26 is transmitted through prism 14, coating 22 and prism 12. Red light 26 exits prism 12 from side 5 and proceeds through quarter-wave plate or retarder 16 until it is reflected by coating 18 on plate 16. Coating 18 is designed to reflect red light and transmit blue light. The fast axis of quarter-wave plate 16 is oriented 45 degrees to the axis of incoming linearly polarized light, such as "P" polarized red light 26, causing linearly polarized light 26 to become circularly polarized. Upon reflection of circularly polarized light from coating or filter 18, the orientation of circular polarization of light 26 is reversed. Passage of red light 26 from filter 18 back through quarter-wave plate 16 changes the circular polarization of light 26 back to linear polarization, but with its orientation orthogonal to the original input "P" polarization, thereby resulting in "S" polarized red light 26 entering prism 12 through side 5. Light 26 of "S" polarization impinges coating 22 and is reflected by coating 22 out of prism 12 through side 2.

Blue light 28 having the "S" polarization travels through three-quarter-wave retarder 20, optical means or film coating 18 and quarter-wave retarder 16. A full wave of retardation is introduced into blue light 28, by retarders 20 and 16, which has no resultant effect on the "S" polarization of light 28. If blue light 28 were "P" polarized, then three-quarter-wave retarder 20 could be replaced with a quarter-wave retarder for a total of half-wave retardation, thereby rotating the polarization vector (i.e., E field vector) 90 degrees to the desired "S" polarization for light 28. Blue light 28 enters prism 12 through side 5 and impinges coating 22. Coating 22 reflects "S" polarized light 28 out of prism 12 through side 2. Thus, green light 24, red light 26 and blue light 28 exit prism 12 in the same direction of propagation. Light 24, 26 and 28 may be of other colors, and films 18 and 22 may have various properties, depending upon the application of device 10.

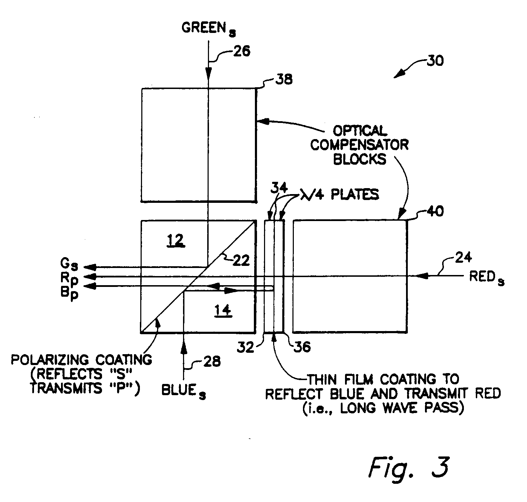

Figure 3, in conjunction with figure 2, reveals a beam splitter/combiner 30 having optical compensation for at least two of the three light beams. Optical compensation provides optical path length adjustment. Such compensation may be in the form of lenses, transparent blocks or other means. Green light 26 having the "S" linear polarization is transmitted through compensation block 38 and into prism 12 through side 5. Light 26 impinges coating 22 which reflects "S" polarized light and transmits "P" polarized light. Thus, light 26 is reflected by coating 22 and then light 26 exits prism 12 through side 2. Red light 24 is transmitted through compensation block 40, quarter-wave plate 36, thin film coating 34 which is a long wave pass filter (i.e., it reflects blue and transmits red light), and quarter wave plate 32. Quarter wave plates 36 and 32 cause a total of one-half wave retardation of light 24, thereby rotating the polarization vector 90 degrees to the "P" polarization position (i.e., quarter-wave (half-wave total) plates each has an axis at 45 degrees to the E field vector of polarized light to rotate the vector for a total of 90 degrees). "P" polarized red light 24 exits plate 32, enters prism 14 through side 1, passes through coating 22 into prism 12 and exits prism 12 through side 2. "S" polarized blue light 28 enters prism 14 through side 6 and is reflected by coating 22 out of prism 14 through side 1 and light 28 goes through quarter-wave plate 32 to coating 34. Light 28 is then reflected by coating 34 back through quarter-wave plate 32. Since light 28 goes through plate 32 twice, there is a total of one-half wave retardation of light 28, thereby rotating the polarization vector 90 degrees to a "P" polarization position. Light 28 returning from plate 32 reenters prism 14 through side 1 and passes through coating 22 into prism 12. Light 28 exits prism 12 through side 2 in the same direction of propagation as light 24 and 26.

Light 24, 26 and 28 may be any combination of colors. Films or coatings 22 and 34 may have various transmissive and reflective properties as needed to accommodate the designated colors of light 24, 26 and 28, for achieving desired properties of device 30.

## Claims

1. A color polarization cube prism (10) for combining/splitting light, comprising:
a) a cube (11), composed of an essentially transparent material, having first, second, third, fourth, fifth and sixth sides, and having first (12) and second (14) halves of said cube juxtaposed at a plane, wherein the first and second halves have boundaries on the third and fourth sides;
b) an optical coating (22) situated between the first (12) and second (14) halves, said optical coating (22) transmitting light having a first polarization and reflecting light having a second polarization;
c) a quarter-wave plate (16) proximate to the fifth side;
d) a wave retarder (20) proximate to said quarter-wave plate (16);
e) a dichroic filter (18) situated between said quarter-wave plate and said wave retarder;
**characterized in that** the elements a) to e) are arranged so as to receive:
- a first light (24) of a first wavelength, having said first polarization, which enters the first side (1) of said cube (11), passes through said optical coating (22), and exits said cube (11) at the second side (2);
- a second light (28) of a second wavelength, having said second polarization, which passes through said wave retarder (20), said dichroic filter (18) and said quarter-wave plate (16), enters the fifth side (5) of said cube (11), impinges the optical coating (22) and is reflected out of said cube (11) through the second side (2); and
- a third light (26) of a third wavelength, having said first polarization, which enters the sixth side (6) of said cube (11), passes through the optical coating (22), exits said cube at the fifth side (5), passes through said quarter-wave plate (16), impinges said dichroic filter (18), is reflected by said dichroic filter (18) back through said quarter-wave plate (16), and which, having its polarization changed to said second polarization, passes through the fifth side (5) into said cube (11), impinges said optical coating (22) and is reflected out of said cube (11) through the second side (2); wherein
- said quarter-wave plate (16) is a quarter-wave plate for said third wavelength, and
- said quater-wave plate (16) in combination with said wave retarder (20) forms a full-wave plate for said second wavelength.

2. The apparatus of claim 1, **characterized in that**:
said first light (24) is green;
said second light (28) is blue; and
said third light (26) is red.

3. Apparatus of claim 1, **characterized in that**:
said first light (24) is blue;
said second light (28) is red; and
said third light (26) is green.

## Patentansprüche

1. Farben-Polarisations-Würfelprisma (10) zum Kombinieren/Aufteilen von Lichtstrahlen, mit:
a) einem im wesentlichen aus transparentem Material bestehenden Würfel (11) mit ersten, zweiten, dritten, vierten, fünften und sechsten Seiten sowie einer ersten (12) und einer zweiten (14) Würfelhälfte, die sich an einer Ebene gegenüberstehen, wobei die ersten und zweiten Hälften Grenzflächen auf der dritten und vierten Seite aufweisen;
b) einer zwischen der ersten (12) und der zweiten (14) Hälfte vorgesehenen optischen Beschichtung (22), welche Licht einer ersten Polarisation hindurchläßt und Licht einer zweiten Polarisation reflektiert;
c) einer der fünften Seite benachbarten Viertelwellenlängenplatte (16);
d) einer der Viertelwellenlängenplatte (16) benachbarten Wellenverzögerungseinrichtung (20);
e) einem zwischen der Viertelwellenlängenplatte und der Wellenverzögerungseinrichtung angeordneten dichroitischen Filter (18);
**gekennzeichnet durch** eine solche Anordnung der Elemente (a) bis (e), daß
- eine erste Strahlung (24) mit einer ersten Wellenlänge und mit der ersten Polarisation in die erste Seite (1) des Würfels (11) eintritt, die optische Beschichtung (22) durchsetzt und den Würfel (11) durch die zweite Seite verläßt;
- eine zweite Strahlung (28) mit einer zweiten Wellenlänge und mit der zweiten Polarisation, welche die Wellenverzögerungseinrichtung (20), das dichroitische Filter (18) und die Viertelwellenlängenplatte (16) durchläuft, in die fünfte Seite (5) des Würfels (11) eintritt, auf die optische Beschichtung (22) auftrifft und durch die zweite Seite (2) aus dem Würfel (11) hinausreflektiert wird;
- eine dritte Strahlung (26) mit einer dritten Wellenlänge und mit der zweiten Polarisation nach Eintritt in den Würfel (11) durch dessen sechste Seite die optische Beschichtung (22) durchsetzt, den Würfel durch die fünfte Seite (5) verläßt, durch die Viertelwellenlängenplatte (16) hindurchläuft, auf das dichroitische Filter (18) auftrifft, von diesem zurück durch die Viertelwellenlängenplatte (16) reflektiert wird und bei Änderung ihrer Polarisation in die zweite Polarisation durch die fünfte Seite (5) in den Würfel (11) eintritt, auf die optische Beschichtung (20) auftrifft und durch die zweite Seite (2) aus dem Würfel hinausreflektiert wird; wobei
- die Viertelwellenlängenplatte (16) eine Viertelwellenlängenplatte für die dritte Wellenlänge ist, und
- die Viertelwellenlängenplatte (16) zusammen mit der Wellenverzögerungseinrichtung (20) eine Ganzwellenplatte für die zweite Wellenlänge bildet.

2. Vorrichtung nach Anspruch 1, **dadurch gekennzeichnet**, daß
die erste Lichtstrahlung (24) grün ist;
die zweite Lichtstrahlung (28) blau ist; und
die dritte Lichtstrahlung (26) rot ist.

3. Vorrichtung nach Anspruch 1, **dadurch gekennzeichnet**, daß
die erste Lichtstrahlung (24) blau ist;
die zweite Lichtstrahlung (28) rot ist; und
die dritte Lichtstrahlung (26) grün ist.

## Revendications

1. Prisme cubique de polarisation de couleur (10) destiné à combiner/séparer la lumière, comprenant:
a) un cube (11), constitué d'un matériau essentiellement transparent, comportant des premier, second, troisième, quatrième, cinquième et sixième côtés, et ayant des première (12) et seconde (14) moitiés dudit cube juxtaposées suivant un plan, dans lequel les première et seconde moitiés ont des limites sur les troisième et quatrième côtés,
b) un revêtement optique (22) situé entre les première (12) et seconde (14) moitiés, ledit revêtement optique (22) transmettant la lumière présentant une première polarisation et réfléchissant la lumière présentant une seconde polarisation,
c) une lame quart d'onde (16) à proximité du cinquième côté,
d) un retardateur d'onde (20) à proximité de ladite lame quart d'onde (16),
e) un filtre dichroïque (18) situé entre ladite lame quart d'onde et ledit retardateur d'onde,
caractérisé en ce que les éléments a) à e) sont agencés de façon à recevoir:
- une première lumière (24) d'une première longueur d'onde, présentant ladite première polarisation, qui entre par le premier côté (1) dudit cube (11), passe au travers dudit revêtement optique (22), et sort dudit cube (11) par le second côté,
- une seconde lumière (28) d'une seconde longueur d'onde, présentant ladite seconde polarisation, qui passe au travers dudit retardateur d'onde (20), dudit filtre dichroïque (18) et ladite lame quart d'onde (16), entre par le cinquième côté (5) dudit cube (11), rencontre le revêtement optique (22) et est réfléchie hors dudit cube (11) au travers du second côté (2), et
- une troisième lumière (26) d'une troisième longueur d'onde, présentant ladite première polarisation, qui entre par le sixième côté (6) dudit cube (11), passe au travers du revêtement optique (22), sort dudit cube par le cinquième côté (5), passe au travers de ladite lame quart d'onde (16), rencontre ledit filtre dichroïque (18), est réfléchie par ledit filtre dichroïque (18) en retour au travers de ladite lame quart d'onde (16), et qui, ayant sa polarisation modifiée en ladite seconde polarisation, passe au travers du cinquième côté (5) dans ledit cube (11), rencontre ledit revêtement optique (22) et est réfléchie hors dudit cube (11) au travers du second côté (2), dans lequel
- ladite lame quart d'onde (16) est une lame quart d'onde pour ladite troisième longueur d'onde, et
- ladite lame quart d'onde (16) en combinaison avec ledit retardateur d'onde (20) forme une lame à onde complète pour ladite seconde longueur d'onde.

2. Dispositif selon la revendication 1, caractérisé en ce que:
ladite première lumière (24) est verte,
ladite seconde lumière (28) est bleue, et
ladite troisième lumière (26) est rouge.

3. Dispositif selon la revendication 1, caractérisé en ce que:
ladite première lumière (24) est bleue,
ladite seconde lumière (28) est rouge, et
ladite troisième lumière (26) est verte.
